# EUROPEAN PATENT SPECIFICATION

(11) **EP 2 436 164 B1**
(45) Date of publication and mention of the grant of the patent: **06.07.2016**
(21) Application number: 10730200.2
(22) Date of filing: 21.05.2010
(51) Int. Cl.: H04L 29/06, H04L 9/32

(54) **METHOD AND EQUIPMENT FOR ESTABLISHING SECURE CONNECTION ON A COMMUNICATION NETWORK**
VERFAHREN UND VORRICHTUNG ZUR HERSTELLUNG EINER SICHEREN VERBINDUNG IN EINEM KOMMUNIKATIONSNETZ
PROCÉDÉ ET ÉQUIPEMENT POUR ÉTABLIR UNE CONNEXION SECURISÉE DANS UN RÉSEAU DE COMMUNICATION

(30) Priority: 26.05.2009 HU 0900322
(43) Date of publication of application: 04.04.2012
(73) Proprietor: Rózsahegyi, László, London Greater London SW1E 6DY (GB)
(72) Inventor: RÓZSAHEGYI, László, London Greater London SW1E 6DY (GB); KISS, Attila, R-540077 Marosvásárhely (RO); SZABÓ, Péter Endre, R-540044 Marosvásárhely (RO)
(74) Representative: Kacsuk, Zsófia
(86) International application number: PCT/HU2010/000060
(87) International publication number: WO 2010/136830

(56) References cited:
- US-A1- 2002 095 569
- US-B1- 7 315 950
- US-B1- 7 480 803

## Description

The invention relates to a method for establishing secure connection on a communication network between a data managing device and a user device that is operated by the user having a user ID. The data managing device and the user device are such IT means which are set up to be able to run operation and data managing programs. In order to establish a secure connection a user equipment having a keyboard adapted for entering data and a display adapted for displaying data is assigned to the user device having a display/monitor and a keyboard. The data managing device is provided with a key managing program adapted for establishing secure connection of the data managing device, for generation, transmission and withdrawal of certificates, cryptographic keys, where the secure connection between the data managing device and the user device is initiated with a login request from the user device.

The Korean patent document no. KR20040083272 describes a user identification method and system applied via the web and/or a wireless network using a mobile terminal having a challenge/response based one-time wireless module, to guarantee secure identification of the user with low cost. The user is connected to an Internet banking server. An ID (identity) and a password for the identification is given by the user. The Internet banking server executes the reception of the momentary password. Following this, a mobile one-time password (MOTP) service server searches a specific MOTP module of the user. The MOTP service server generates a challenge which is transmitted to the user terminal or user computer. The user terminal generates a one-time response password which is transferred to the MOTP service server. The MOTP service server determines whether the user authentication is successful. If the user authentication is successful, the MOTP service server transmits the corresponding result to the Internet banking server and the Internet banking server allows the user to use an e-banking service.

Requesting the user password beside the user ID is unnecessary, because it is fully replaced by the unique user response given to the unique challenge. The so called challenge/response MOTP server serves the execution of the actual user identification (in the method according to the present invention this may take place in the mentioned banking server or separately, just like in the mentioned document). In the solution according to our invention no wireless connection is required because there is a possibility for a manual or short distance Bluetooth connection too, when there is no need for any kind of WIFI or Mobile network coverage for the user terminal generating the response code to recognize the MOTP code. The described solution is a special on-line mobile banking solution for the security bank connection with mobile phone, in contrast with the method according to the invention which is a generally applicable user authentication method for multi-member data supply systems requiring distinct user identification technologies.

The Korean patent no. KR20050010430 describes a method and system for the user identification using a one-time password (OTP) through a different communication network. The different communication networks are provided with means for the reception of the OTP arriving through the mobile network and with means for identification in order to maximize the user's convenience without installing an OTP generation application to a terminal. The first network interface transmits/receives data with the first user terminal or a specified service system through the first network. The second network interface transmits/receives the data with the second user terminal through the second network. A challenge code generator generates a challenge code by responding to a request from the service system. A response code generator generates a response code in accordance with the challenge code. An SMS server authenticates the user by comparing the generated response code with the response code received from the first terminal through the first network, and transmits a short text message through the second network to the second user terminal.

This solution is a typical banking solution, where it is part of the procedure that the user authentication is executed through two independent networks (IT terminal and mobile network). The description emphasises that it requires a mobile telephone connection because the challenge code is sent in an SMS for example to the mobile terminal of the user (in these days the banks mostly use this method). The description emphasises that no response code generator must be installed on the mobile phone, but in spite of this it refers to response codes. This may be because it regards the correct return of the response code through the original communication channel given to the challenge code arriving to the mobile (this solution is used in most banking applications), but it can be also because a response generation module is installed to the terminal using the first communication channel and following this the response code created on the terminal from the challenge is sent back as a response.

In this method the mobile is used only for reception of the SMS. The method according to the above document is completely different from the method applied in the present solution considering that the procedure according to the present invention does not require any kind of mobile network connection, further in the method according to the invention there is a software installed to the user equipment (practically a mobile telephone) suitable for receiving the keys of various types and strength, for the simple and quick change of them and for the execution of the operations related to the keys. WO2006/079145 relates to an authentication method, wherein an authentication request is transmitted to a personal mobile terminal of a user preferably in the form of an SMS; the SMS message launches a security application on the user's mobile terminal (handset), after which the user is prompted to enter a personal code into his personal mobile terminal. The security application then digitally signs the authentication request (which can be in the form of a cryptographic hash) using the pin code and a private key stored on the personal mobile terminal. The resulting unique numeric code serves to authenticate the user. Hence, WO2006/079145 does not eliminate the inconvenience of requiring two independent network connections (Internet and mobile network), instead it strives to increase the security level of conventional SMS-based authentication procedures.

The Korean patent document no. KR100351264B describes a communication terminal for embedding one-time password (OTP) generating function based on challenge-response. The communication terminal is provided to minimize the key input of a user by embodying an OTP function and a normal function of the communication terminal, for performing an authentication procedure based on the challenge-response. An electronic telephone-type keypad inputs alpha numeric data. An OTP generating unit receives a challenge in a state in which an authentication token mode is set up for generating an OTP based on a challenge-response protocol and generates a user side response corresponding to the challenge using a unidirectional function. A communication module unit receives the challenge through a wired and wireless communication network and transmits the user side response generated in the OTP generating unit through the wired and wireless communication network for performing a transmission and reception function for a normal voice communication in a normal communication mode, and providing an authentication service based on the challenge/response protocol in the authentication token mode. An authentication parameter memory stores various authentication parameters including a PIN (Personal Identification Number) and an encryption key. The described solution undertakes to reduce the data input operations expected from the user through building in the challenge/response (challenge/response) generation and the login functions of the user and they communicate with this unit via a landline/wireless connection. Essentially, this is a token which executes a challenge/response operation (most often only a time based coding is executed with one token). This procedure is specifically such a target oriented procedure that is used for the user identification related to the use of the telephone and the payment of fees. When the user wants to telephone then his/her identity must be found out safely in order that the cost bearer can be identified. However, it can be seen that this is a special target solution and it is significantly different from the method of our invention regarding its objective and implementation.

The American patent no. US 2008/0172713 describes network security enforcement system including a central location adapted to send a challenge and at least one client station. Each of the client stations are provided with an agent and are in communication with the central location. The system includes a set of independent one-time passwords. There is an index value assigned to each of the one-time passwords. In response to a challenge sent by the central location to at least one of the client station, the agent returns a one-time password to the central location corresponding to the correct response otherwise the central location considers the client station insecure.

This is a very old OTP solution. The essence of it is that a series of unique codes (4-6 digits) are created, which are sent in a letter for instance. Following this, these OTP numbers must be used for the banking login. The use of the given code invalidates the code at the same time. The central server tracks the route of the use, which client and code it has reached etc. It is completely different from the method according to our invention.

The American patent no. US 2007/0255960 teaches a system and method for the validation of a network connection. The aim of this system and method is to prevent unauthorised persons divert or get familiar with information travelling through the network. A token is used to generate a one-time password, which is outside the network connection in order to prevent the decoding of the password. The encrypted one-time password is returned to a network server for authentication. The server compares the one-time password with the password generated by its own system to state correspondence. If it finds correspondence then it provides access for the user to the network, if not, then it rejects the access to the network.

This is the classical token type OTP response generation with generally long time base. The patent document no. US 2007/0061865 describes a method, apparatus, system and signal-bearing medium for receiving cues, one-time passwords and a presentation order. The cues and one-time passwords are associated with a user name. In response to a cue request the cues are presented in the presentation order and input data is received. If the input data matches the associated one-time password, then access to secure information is granted and the one-time password is invalidated. If the input data does not match the associated one-time password, then access to secure information is denied. In other embodiments the cues may be text, images, audio or video. In this way, in one embodiment one-time passwords may be used in response to cues, which may increase security when accessing information from a non-trusted client because if the one-time password is misappropriated via the non-trusted client, the one-time password is no longer valid for future use.

This solution assigns a picture, text, music, video etc. (a CUE by overall name) to the user. For the login request of the user e.g.: the server is sending a few times of the music (clue), for which the user is generating a response with a token in a way known to him/her.

As a general rule it can be told that by increasing the number of identification phases for example with the use of a user token or with the use of other device independent of the user, (e.g.: mobile phone etc.) the security of user identification may be enhanced, but the optional number of the applied phases is limited because of the possible errors and inconveniences resulting from the complexity of user identification, thereby resulting in significant increase of time required for user identification.

The objective of our invention is a method suitable for a simple, cheap and secure user identification universally useable in IT systems, during which the complexity of the applied user identification and the value of the data attainable through user identification can be harmonized.

It has been realized that with the help of a user equipment (practically a mobile phone), and a user device (practically a computer terminal), and by means of a key managing program as well as suitable user keys a method may be implemented with the application of which various authentication requirements - requiring more authentication processes and technology (even differing from each other) - can be satisfied simultaneously. It also becomes possible to apply the keys of different complexity (64, 128, 256 bit etc.) and technology (symmetric and asymmetric etc.) parallel and jointly during user identification without noticeably influencing the complexity of it. It has been realized that it is feasible to apply a secure user identification process requiring differing rules of procedures and identification technologies by means of one single user equipment (e.g.: a mobile phone). That is, the establishment of a simple, secure and cost-effective connection is realizable related to any kind of IT system, even in the case of user identification requirements of optional levels.

The above objects are achieved by the method according to claim 1.

Preferably, the user device is an IT device, preferably a computer terminal connected to the communication network, preferably telephone network or Internet or other landline or wireless network, being able to communicate with the data managing device. Preferably, the user equipment is a mobile phone or a personal digital assistant (PDA) or a palmtop or other intelligent device provided with a data input unit and a display and suitable for storing and running the key managing program, as well as for storing the user key(s) securely and for simple exchange of the same.

Preferably, for starting the key managing program installed on said user equipment, or for starting operations with certain user keys, a security code is requested from the user to be entered on the keyboard of said user equipment or through other device suitable for determination of the physical presence of the user (e.g. fingerprint control). Preferably, the key managing program necessary for the establishment of the secure connection is transmitted to the user equipment through the communication network participating in the connection of said data managing device and said user device, or through other landline or wireless network independent of this communication network suitable for data transmission.

Preferably, the key managing program necessary for the establishment of the secure connection is transmitted to the user equipment through the communication network participating in the connection of said data managing device and said user device, or through other landline or wireless network independent of this communication network suitable for data transmission (e.g.: SMS, Bluetooth, wifi, infra red).

Preferably, the key(s) necessary for the establishment of the secure connection are transmitted on-line to the user, then to said user equipment through the communication network participating in the connection of said data managing device and said user device, or other landline or wireless network independent of this communication network suitable for secure data transmission (e.g.: SMS, Bluetooth, wireless), while the key ID(s) guaranteeing the secure delivery of the key(s) are transmitted to the user in a separate step on-line (e.g.: SMS) or by post in printed form to said user device or user equipment.

Preferably, the secure storage of the user key(s) is realized in coded form.

Preferably, as user ID an optional, unique series of characters is chosen which ID is an alpha numerical code of optional length, for example the electronic mail address of the user.

Preferably, if a false code is entered repeatedly into said user device or user equipment (for example unauthorised starting attempts), the key managing program installed on said user equipment and/or the user key(s) are automatically eliminated.

Preferably, the login code needed for the establishment of the secure connection is transmitted to said data managing device and/or user device directly through said user equipment.

Preferably, during the establishment of the connection in addition to sending the login code further codes e.g.: GPS (Geographical Positioning System) type data are also sent to the data managing device through said user equipment or user device.

Preferably, in case of incidental loss of said user equipment, or the rules of the protocol related to the user keys and/or the user keys becoming public which is reported through an optional communication channel e.g. by telephone, after correct user identification acceptance of the use of the user keys is suspended or terminated at the data managing device.

Preferably, at least two types of expected user codes belonging to the given user ID are generated in said data managing device, one of which is a normal login code referring to the secure situation of the user, while the other one is a panic login code featuring the threatened situation of the user.

Preferably if during checking of the login code in said data managing device a correspondence with the panic login code of the user is determined, the establishment of the connection between said data managing device and said user device is authorized in a way different from the normal, e.g. false data is sent to said user device or the instructions received form the user are executed in a false way, preferably in a manner previously agreed with the user.

Preferably, other kind of automatic alerting process is initiated automatically in said data managing device, for example alerting the police and/or sending an SMS, fax, e-mail, telephone message for the persons previously set in said data managing device for such cases.

The user equipment may be a mobile phone, a PDA, a palmtop, a laptop or a computer terminal.
Figure 1 is a flowchart illustrating the first part of a process to be executed once for establishing a secure connection for the first time between the data managing device and the user device;
Figure 2 is a flowchart illustrating the establishment of a secure connection between the data managing device and the user device;
Figure 3 is a flowchart illustrating the establishment of a secure connection between the data managing device and the user device, where a user equipment is also applied.
Figure 4 shows a possible embodiment of the hardware required for application of the method.

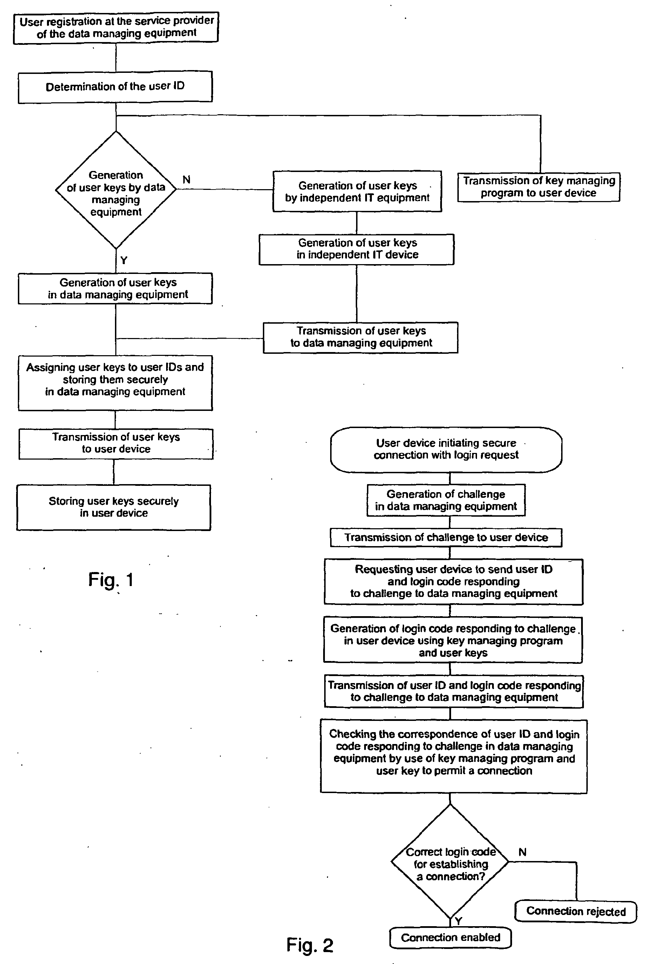

The method according to the invention can be divided into two parts. The first part comprises the establishment of the so called basic connection preceding the regular user logins for the establishment of the very first connection (Figure 1), while the second one comprises the establishment of the connection to be used during each further user login following the very first successful connection enabling the traffic of confidential data (Figures 2. and 3). In Figure 1 establishment of such terminal/server connection operated by the user is shown, which is more secure than any of the known user identification methods, and which at the same time enables a more flexible and cost-effective user identification.

With the method according to the invention it is basically possible to establish a data connection containing secure user identification to any kind of existing server-based service (e.g.: with banks, computers, with servers handling data or e-mail working under an optional operation system, IT network controlling routers etc.) through a generally known (e.g.: telephone network, and/or Internet and/or optional landline or wireless) communication network. During the secure user identification process the means applied in the process are connected to the communication network. These are for example the data managing device and the user device - provided that the user device is equipped with a display/monitor and keyboard -operated by the user. These means are configured in so that they are able to run operating and data managing programs. The data managing device is provided with a key managing program adapted for establishing the secure connection of the data managing device, for generation, transmission and withdrawal of certificates, cryptographic keys. As data managing device a generally used IT device connected to the communication network, preferably a computer server is applied which is able to communicate with the user device.

As user device an IT device connected to the communication network preferably a computer terminal is used, which is able to communicate with the data managing device securely. The key managing program adapted for generation, management, transmission and occasionally exchange of keys can be any known program suitable for the purpose. The establishment of the secure connection between the data managing device and the user device is initiated by the user with a login request from the user device to the data managing device.

For user ID an optional, unique series of characters is chosen. The ID is an alpha numerical code of optional length, practically it may be for example the electronic mail address of the user. The safety of the user identification applied in the method according to the invention is not reduced by such simplified options which for example apply the electronic mail address of the user as user ID during logging in (basically it is an accessible, almost public data for anyone). In other systems a user ID with constant content and a user password with also a constant content are widely used. The method according to the invention uses a so called login code which is always a one-time password - which is generated in the user device by the data managing device according to the user identification process determined after the login request - instead of a constant user password.

In the method according to this example it is necessary to transmit the key managing program to the data managing device and user device suitable for the operation of computer program(s) before establishment of the regular secure connection between the data managing device (server) and the user device (e.g.: the desk computer, laptop, palmtop of the user etc.). The key managing program necessary for the establishment of the secure connection is transmitted to the user device through a communication network connecting the data managing device and the user device, or through other landline or wireless network independent of this communication network suited to transmit data (e.g.: SMS, Bluetooth, wifi, infrared etc).

The user key(s) representing various types (symmetrical, asymmetrical, other) and different strengths of cryptography (the cryptographic strength can be enhanced with the increase of the length of the applied user key(s)), required for the secure user identification are generated in the data managing device or in the user device or in another IT device suitable for this purpose. If the user key(s) are generated in an IT device independent of the data managing device, these key(s) are transmitted to the data managing device in a secure form through the communication network. Following this the user key(s) and the user IDs assigned to each other are stored in a secure way in the data managing device. So called key identification code(s) are also assigned to the so generated user key(s) which key identification code(s) are transmitted to the user by the person/organization operating the data managing device, through an independent communication channel (e.g.: personal handing over, SMS sending or postal delivery etc.) in a secure way. The user imports the user keys to his/her user device operating the key managing program in such way that he/she transmits his/her user ID together with the ID of the key to be used in the given procedure and his/her user code to be used in the future for coding of the key to the device storing the user key(s) securely, and requests with the use of the user code the electronic transmission of the user key(s) belonging to the transmitted data through the network.

The key managing program running on the data managing device examines whether there are key(s) having the ID of the requested key belonging to the received user ID the user has not asked for so far (has not imported). If it can find such key in the database, then it transmits it to the IT device used for the request of the key transmission in electronic way in a coded form with the use of the received user code through the communication network. If the key managing program running on the data managing device does not find a user key identifiable with the data given in the user request, and which has not been asked for yet, then it rejects the request concerning the transmission of the key. The successfully imported user key(s) are stored in a secure way (practically encrypted) in the IT device of the user ensuring that unauthorised access is prevented.

In this phase of the method the basic information databases required for the subsequent identification of the user have been generated (Figure 1).

In the second phase the establishment of each further secure connection and the authorisation of the confidential data traffic of the user successfully performing the first phase takes place, during which the key managing program running on the data managing device must check whether the one-time login code arriving from the user device has been indeed generated by the user previously correctly registered by means of the device operated in the moment of the login request.

The first step of this phase is that the user initiates the establishment of the secure connection through the communication network by means of the data managing device via the user device. Then it is determined whether the data managing device requires a simple OTP (One-Time Password) process or another e.g.: challenge/response type OTP process for the secure user identification. In the case of the challenge/response type OTP process the key managing program of the data managing device generates the one-time challenge code for the execution of the secure user identification process corresponding the rules of procedure determined by the data managing device - which is practically a numerical or an alpha numerical series of characters of optional length - and through the communication network it transmits this challenge code from the data managing device to the user device initiating the establishment of the secure connection. At the same time it waits for the user device to send the user ID and the proper login code (response code) responding to the challenge code.

In the next step with the use of the challenge code shown in the display of the user device the key managing program running on the user device generates a numerical or an alpha numerical login code of optional length to be decoded with the user code applied by the user, with the application of the previously successfully imported user key and the generally known cryptographic methods, which code is practically displayed on the display of the user device. Then the login code together with the user ID is transmitted securely through the communication network to the data managing device. Finally it is determined whether the user ID arriving to the data managing device and the login code match, thereby executing the secure identification of the user currently handling the user device in a manner that the challenge code generated by the data managing device and the user key(s) belonging to the given user ID are used together by the key managing program of the data managing device for generating the possible login code(s) belonging to the given user, and if the login code arriving from the user device complies with any of the generated login code(s), establishment of the secure connection between the data managing device and the user device is permitted for the service according to the given user key and the prescribed rules of procedure.

The user identification carried out with the simple OTP data is different from the challenge/response type OTP procedure in the fact that a challenge code is not generated in the data managing device. In addition to the user ID to be sent to the data managing device by the user a single use login code generated by the user on his own is used.

So that the user be able to establish a secure connection parallel with more service providers operating different data managing devices (e.g.: with banks, databanks, company servers, network routers etc.), that is with a finite number of data managing devices, or to establish secure connections sequentially, several keys of various types, technologies and cryptographic strength belonging to the given user can also be stored in the data managing device and in the user device.

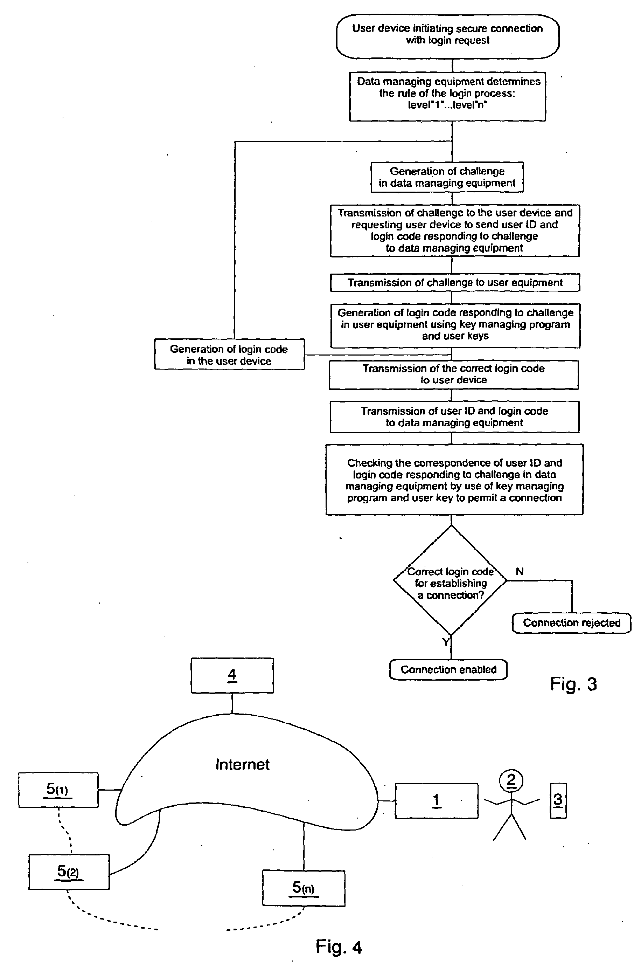

In a preferred embodiment of the invention (Figure 3) a user equipment provided with a keyboard adapted for data input and a display adapted for data display is assigned to the user device. As user equipment a mobile phone or a personal digital assistant (PDA), a palmtop or another intelligent device suitable for the storage and running of software and data exchange may be used.

The data managing device and the user device are configured according to the written above. In this method the secure connection between the data managing device and the user device is started with a login request initiated from the user device. Before the establishment of the secure connection between the data managing device and the user device the steps of the previously described method are only different in that the user equipment is used instead of the user device for operating the key managing program and for storing the user keys.

Due to this difference, in this procedure if the application of a one-time challenge code by the data managing device is required in the secure user identification, the one-time challenge code generated with the key managing program of the data managing device is transmitted directly to the user equipment or through the user device using the keyboard of the user equipment manually, or through other landline or wireless (e.g.: blue tooth, infrared, wireless etc.) communication channel. The proper login code to be given for the challenge code is generated by applying the key managing program running on the user equipment together with the user key decoded on the basis of the user code and the challenge code of the data managing device using known cryptographic operations. After that the login code from the user equipment is transmitted to the data managing device directly or through the user device via a landline or wireless (e.g.: SMS, Bluetooth, infrared, wireless etc.) communication channel, or manually using the keyboard of the user device.

In case of incidental loss or compromise of the user codes belonging to the user keys and/or in case of the user keys become public (possibly from the user equipment/device or data managing device or as a result of other accidental event), the user can suspend the use of the user keys centrally (key revocation process) via an optional communication channel, e.g.: by reporting by telephone and giving proper user identification. After the revocation of the user keys due to any reason - in order to achieve intensified security -, instead of the re-activation of the keys practically new user keys are generated, which key(s) are transmitted to the data managing device and the user device or user equipment according to the method of the invention. After this, establishment of the secure connection according to the method of the invention is executed, using the new user equipment and/or key managing program and/or user key(s), basically with a switch free of charge and with no significant time delay from the point of view of user communication (e.g.: 1 hour).

In order to intensify the security of starting of the key managing program installed on the user device or user equipment, or starting operations with the certain user keys, a security code is requested from the user. This may be done on the keyboard of the user device or user equipment or through any other device suitable for determination of the presence of the user (pl. fingerprint control).

With the method according to the invention a special possibility is provided. Namely it is that the user can indicate a danger situation (undetectable for any outer observer), and through this to initiate a call for help during the secure user identification process (e.g.: if the user connects the data managing device under force). To this at least two user keys- a normal key and a panic key - are applied in the user device/equipment and accordingly also in the data managing device when the login code is generated during the secure identification of the user. The normal key is used for establishing a normal connection initiated by the user, while the panic key is used when the user initiates the establishment of the secure connection with the data managing device under threat or force for any reason.

If the data managing device determines during checking of the login code a correspondence with the panic login code of the user, the connection between the data managing device and the user device is established in a way distinct from the normal way. For instance false data is sent to the user device, and the instructions received from the user is executed in a false way, practically in a way previously agreed with the user. Additionally an other kind of automatic alerting process - for example alerting the police and/or sending an SMS, fax, e-mail, telephone message etc. for the persons previously specified in the data managing device for such cases - is initiated automatically with the data managing device.

If a false code is given repeatedly to the user device or user equipment (for example unauthorised starting attempts), we automatically eliminate the key managing program and the user keys installed on the user equipment, for example in a self-eliminating way.

One typical implementation of the method according to the invention is the following, for which Figure 4 presents a possible hardware configuration:
*Tasks to be carried out before the establishment of a secure connection:*
   1. Installation of the key managing program adapted for the assessment of the establishment of the server side secure connection, as well as for generation, transmission and withdrawal of certificates (keys), to the data managing device 5 (server). This supplier server - in addition to its own service -, independently executes the checking tasks of the logging in of the users on the basis of the method according to the invention.
   2. Registration of user 2 requesting the services of the data managing device 5 (servers) at the operator of the data managing device 5 (supplier server). During or after registration the user name and user keys are generated by the supplier by means of the data managing device 5, then the key IDs are created which are needed for transmission/reception of the user keys personally, via post or in an SMS for user 2.
   3. Secure storage of the user keys and user IDs assigned to each other in the data managing device 5.
   4. Installation of the program (user key managing program) suitable for the reception of the user keys required for establishing secure connection and for execution of the cryptographic operations with the keys to the user equipment 3 of user 2 (practically the equipment is a mobile phone, PDA (Personal Digital Assistant) of the user).
   5. Provision for the continuous Internet or other network connection suitable for secure data transmission (x25, etc.) between user device 1 (computer) and data managing device 5 serving the users, also enabling managing of a protected communication connection (SSL, https, etc.).
   6. User 2 imports the user keys to his user equipment 3 operating the key managing program in a way that he sends his user ID (e.g.: his e-mail address) and the ID of the user key to be applied in the given method (a kind of PIN code type ID), together with his user code to be used in the future for the coding of the given key, to the data managing device 5 storing the user key(s) securely and requests the electronic transmission of the user key(s) belonging to the sent data with the use of the user code in a coded form through the network. The key managing program running on the data managing device 5 examines whether there is a key having the ID of the requested key belonging to the received user ID the user has not asked for so far (has not imported). As far as it can find such key in the database, then it transmits it in electronic way in coded form with the use of the received user code to the IT device used for the request of the key transmission through the communication network.
   7. If the key managing program running on the data managing device does not find a user key identifiable with the data given in the user request, and which has not been asked for yet, then it rejects the request concerning the transmission of the key.
   8. After this the successfully imported user key(s) are stored in a secure way (practically encrypted) in the IT device of the user (user device 1 or user equipment 3) ensuring that unauthorised access is prevented.
*Tasks to be executed in each case on establishing a secure connection:*
   9. Initiation of the establishment of a secure connection from the user device 1 (user terminal), towards the data managing device 5 (server).
   10. Login protocol required by the data managing device 5, as well as the data corresponding the protocol (may be various):
      in case of a simple time login code based login protocol (Level1) login demand (no server data sent e.g.: no challenge code), the access code can be read directly from the user equipment /user device;
      in case of a compound time login code based login protocol (Level2) login demand there is no server data sent e.g.: no challenge code, but there are at least two kinds of user codes (normal and panic) with which decoding of the given user keys can be executed. The access code can be read from the user equipment /user device after entering the proper code;
      in the case of challenge/response type login protocol (Level3) login demand the data managing device 5 generates a challenge code, which challenge code is sent to the user device 1.

      In all procedures the data managing device 5 expects user 2 to send the user data required for the establishment of the secure connection (user ID and the access code substituting the user password) through the user device 1.
   11. User 2 starts on his user equipment 3 (mobile telephone) the key managing program required for the method according to the invention and selects the user identification protocol (Level1- Level *n*), prescribed by the data managing device 5 (supplier server) for the establishment of the secure connection and then through the data entry unit of the user equipment 3 (as far as the required user identification protocol was Level3, challenge/response type for example) gives the user equipment 3 the challenge code sent by the data managing device 5 to terminal 1, then by means of the key managing program, with the help of the keys depending on the applied user code, generates and displays the so called login code on the display of the user equipment 3.
   12. User 2 gives the login code - which in case of challenge/response type login was generated by using of one of the user keys and the challenge code together by means of the key managing program and which is displayed on the display of the user equipment 3 - to the user device 1 through the data input of user device 1 (terminal), then sends it together with his/her user ID to the data managing device 5 (server) through the protected communication channel. The reception/transmission of the challenge code and the login code may take place partly or on the whole with the help of automatic data transfer (infra, Bluetooth, Wi-Fi etc.) too.
   13. The data managing device 5 performs the required cryptographic operations using the user keys belonging to the user ID received from the user device 1 stored in the data managing device 5, (server) then compares its own calculation results with the data received from the user device 1. As far as it finds correspondence with the login code belonging to the given user and the one calculated with the keys belonging to the protocol prescribed for the secure identification of the user formerly, then the data managing device 5 regards the user device 1 as operated by the user 2 and authorises the secure data traffic between the data managing device 5 and the user device 1.
   14. As far as the data managing device 5 finds a correspondence with the login code calculated with the so called panic key belonging to the given login process of the user 2, then unlike the authorisation of the normal connection it authorises the secure data traffic of the user device 1 according to the so called endangered or forced user login.
   15. If in case of user identification according to item 14 the GPS data of user 2 has also been sent, then the use of this data also takes place according to the panic login plan.
   16. In the login process we can apply a central server 4 which may be adapted for the execution of several types of sub tasks.
      on the one hand it supplies the data managing unit 5 with adequate data, programs
      in certain cases the central server 4 can be operated as a central login server, connecting the user device 1 of the user 2 with the data managing device 5 executing the tasks determined by the login code at the time of logging in (e.g.: communication with banks, databases, company servers, network routers etc.), as far as the authorisation of user 2 has been justified during the login procedure.

The advantage of the method according to the invention is that the security of the authentication process can be intensified in such way that the complexity of the activity expected from the user in the authentication process does not increase significantly. Accordingly, if the user (cryptographic) keys, PIN codes get damaged, or they are used by an unauthorized person or the user equipment is lost or compromised, the change of the software and the keys can be done very quickly and basically cost free, in contracts with the change of the tokens or smart cards, because their change means physical delivery, consequently a several days loss of time, as well as extra costs. With the application of the method according to the invention the secure authentication process can be restored within a very short time (app. within 1 hour), including even the purchase of a new mobile phone and the download of the necessary key managing software and the new keys to the new user equipment. In case of the loss, compromise of the traditional identification means the replacement of these means may take even several days and during this time the user is not able to perform for example banking operations or to access confidential data, which may cause significant damages.

With the application of the user equipment (practically a mobile phone) in the method according to the invention parallel and mixed application of an optional number of cryptographic keys with different complexity and technology (e.g.: 64, 128, 256, 2048 bit etc., symmetric and asymmetric in structure etc.) is also possible, practically by implementing a method belonging to certain keys, key types, but applying different rules of execution (with user code or without user code, simple OTP or challenge/response type OTP etc.). As a result of this authentication methods of various phase number and security level requiring quite different user identification may be realized on a single user equipment. In known solutions the different authentication prescriptions generally can be solved only with different target hardware. An average user might need the continuous possession and application of even 8-10 kinds of physical devices (tokens and cards etc.) for his/her authentication claims relating to different roles and different levels and different service providers. In case of the lack of the continuous availability or damage, loss of these means, possible unauthorised use, change, renewal of the unique equipments is very expensive, inconvenient and time consuming for the user. Another advantage of the method according to the invention is the possibility of the unobservable application of the panic code. With the application of this function even the nature of the threatening (armed threatening, blackmail etc.) can be forwarded during the user identification process. Thus the physical assistance or the rescue of the assets to be acquired illegally (e.g.: forced bank transfer etc.) becomes possible and flexible handling of special events may be realized through various types of alerts (SMS, email, fax, telephone etc.) used in the authentication process. With the use of the mobile phone having a GPS receiver it is possible to forward the geographical position of the endangered person, which may significantly facilitate the organization of the rescue action.

In the method according to the invention during the establishment of the connection in addition to sending the user ID and the access code containing different hidden information further codes e.g.: GPS (Geographical Positioning System) type data are also sent to the data managing device from the user equipment or user device.

With the application of a mobile phone (user equipment) and user device provided with Wireless, Bluetooth, Infra etc. communication, the method according to the invention also makes it possible during the authentication process that the codes to be transmitted between the user equipment and the user device (e.g.: challenge, login codes etc.) can be given not only manually. It is also possible to transmit these codes in a half automatic way (e.g.: if there is a Wi-Fi, Bluetooth, infra etc. channel available). Through this for example the length of the codes handled in the user identification can be freely increased which further enhances the strength of the authentication in a manner that it remains convenient for the user as he does not detect its complexity or time expenditure.

A further advantage of the method according to the invention is that during the secure user identification the steps repeating on each login no mobile signal coverage is required for the generation of the login code in the user equipment and for the transmission of the login code into the data managing device, namely the user equipment, practically a mobile phone is able to generate a login code even if it is operated when there is no mobile telephone network.

To sum up, the critical element of on-line confidential data access authorisation on dynamically developing open IT network is that reliable user identification shall take place among circumstances where between the data managing device and the user there may be even a continent's distance and significant time-lag, consequently the execution of the traditional user identification is impossible. The joint application of the procedure according to the invention and the user equipment is surpassingly secure and at the same time it provides a very comfortable and cheap user identification possibility for the user. In the user identification process in addition to the basic information transmission of other crucial messages (panic situation, GPS position etc.) is also possible. A malicious person cannot obtain information relating to generation of messages through the communication network. Hereby the prevention of a situation endangering the user or other significant assets is ensured with more chance.

## Claims

1. Method for establishing secure connection on a communication network between a data managing device (5) and a user device (1) which is operated by a user (2) having a user ID, wherein said data managing device (5) and said user device (1) are such IT means which are adapted to run operating programs and data managing programs, and in order to establish a secure connection a user equipment (3) having a keyboard adapted for entering data and a display adapted for displaying data is assigned to the user device (1) having a display/monitor and a keyboard; said data managing device (5) is provided with a key managing program adapted for establishing secure connections, and for generation, transmission and withdrawal of certificates and cryptographic keys; wherein the secure connection between said data managing device (5) and said user device (1) is initiated with a login request from the user device (1); and prior to establishing a secure connection between said data managing device (5) and said user device (1) the following steps are taken:
- transferring the key managing program to said user equipment (3) adapted for the operation of computer program(s);
- generating user key(s) required for establishing a secure connection by means of a suitable program installed to an independent IT device or to said data managing device (5);
- sending said user key(s) in a secure way to said user equipment (3) and to said data managing device (5) if they were generated with the independent IT device;
- storing said user key(s) and user IDs assigned to each other in said data managing device (5), while in said user equipment (3) adapted for storing the key(s) they are stored independently, but in a secure way preventing unauthorised access;
**characterized in that** the following steps are performed:
- initiating establishment of a secure connection with said data managing device (5) from said user device (1) through the communication network,
- determining at least one secure user identification protocol by said data managing device (5) and communicating this to said user device (1),
- waiting for the user device (1) to send back to the data managing device (5) a user ID and an one-time login code generated in accordance with any one of the secure user identification protocols determined by said data managing device (5) and communicated to said user device (1);
- requiring the user (2) to launch the key managing program on the user equipment (3),
- requiring the user (2) to select any one of the secure user identification protocols determined by the data managing device (5),
- generating the one-time login code by means of the key managing program running on the user equipment (3) and by means of the user key(s) previously sent to the user equipment (3),
- sending the one-time login code and the user ID via the user device (1) to said data managing device (5) through the communication network;
- determining whether the user ID matches the one-time login code sent to said data managing device (5), thereby performing secure identification of the user (2) operating the user device (1) by generating the possible one-time login code(s) belonging to the user ID via said data managing device (5) using the key managing program of the data managing device (5) and the user key(s) belonging to the given user ID, and
- permitting via the data managing device (5) the establishment of the secure connection between the data managing device (5) and the user device (1) for the user (2) operating the user device (1) for the service belonging to the given user key if the one-time login code sent from the user device (1) indicates compliance with any of the generated login code(s).

2. Method according to claim 1 **characterized in that** the data managing device (5) require a secure user identification protocol which is:
- an one-time login code based protocol wherein no server data is sent from the data managing device (5) to the user device (1) and the generated one-time login code can be read directly from the user equipment (3);
- a compound time login code based protocol wherein no server data a challenge code is sent from the data managing device (5) to the user device (1), and there are at least two kinds of user codes, a normal user code and a panic user code, with which decoding of the given user keys is executed, and the one-time login code generated in response to the user code can be read from the user equipment (3); or
- a challenge/response type protocol wherein the data managing device (5) generates a challenge code, which challenge code is sent to the user device (1).

3. Method according to claim 1 **characterized in**
- requiring by the data managing device (5) a challenge/response type secure user identification protocol,
- generating a challenge code by the data managing device (5),
- sending the challenge code to the user device (1),
- requiring the user to enter the challenge code in the user equipment (3) through the data entry unit of the user equipment (3),
- generating the one-time login code by the key managing program running on the user equipment (3) using one of the user keys and the challenge code,
- displaying the generated one-time login code on the display of the user equipment (3),
- requiring the user to input the one-time login code in the user device (1) through the data input of the user device (1).

4. Method according to any of claims 1-3 **characterized in** generating user key(s) of different types and of cryptographically differing strength required for the establishment of the secure connection in the data managing device (5) or in another IT device suitable for this purpose under the control of a person/organization operating the data managing device (5), and at the same time the user key(s) are also provided with key IDs serving for identification of the keys.

5. Method according to any of claims 1- 4 **characterized in that** the key(s) necessary for the establishment of the secure connection are transmitted on-line to the user (2), then to said user equipment (3) through the communication network participating in the connection of said data managing device (5) and said user device (1), or other landline or wireless network independent of this communication network suitable for secure data transmission, while the key ID(s) guaranteeing the secure delivery of the key(s) are transmitted to the user (2) in a separate step on-line or by post in printed form to said user device (1) or user equipment (3).

6. Method according to any of claims 3-5 **characterized in that** at least two user keys, a normal key and a panic key, are applied in said user equipment (3) and in said data managing device (5), the normal key is used in establishing a secure but normal connection initiated by the user (2), while the panic key is used when the user (2) initiates the establishment of the secure connection under threat.

7. Method according to any of claims 1-6 **characterized in that** for starting the key managing program installed on said user equipment (3), or for starting operations with certain user keys, a security code is requested from the user (2) to be entered on the keyboard of said user equipment (3) or through other device suitable for determination of the physical presence of the user (2).

8. Method according to claim 7 **characterized in that** for starting the key managing program installed on said user equipment (3) or for starting operations with certain user keys, a normal security code in normal situations and a panic security code in a threatened or forced situation is entered through the keyboard of said user equipment (3).

9. Method according to any of claims 7-8 **characterized in that** at least two types of expected user codes belonging to the given user ID are generated in said data managing device (5), one of which is a normal login code referring to the secure situation of the user (2), while the other one is a panic login code featuring the threatened situation of the user (2).

10. Method according to claim 9 **characterized in that** if during checking of the login code in said data managing device (5) a correspondence with the panic login code of the user (2) is determined, the establishment of the connection between said data managing device (5) and said user device (1) is authorized in a way different from the normal.

11. Method according to claim 10 **characterized in** initiating an automatic alerting process chosen from a group consisting of alerting the police, sending an SMS, fax, e-mail or telephone message to the persons previously set in the data managing device (5) for such cases

12. Method according to any of claims 1-11 **characterized in that** in order to make the user (2) able to establish a secure connection parallel or sequentially with more service providers operating with a finite number of data managing devices (5), several keys of the same or various types and technologies, with different length belonging to the given user (2) are applied in the data managing device (5) and in the user equipment (3), thereby keys of different cryptographic strength are used for generation of the one-time login code.

13. Method according to any of claims 1-12 **characterized in that** if a false code is entered repeatedly into said user equipment (3), then the user key(s) are automatically eliminated.

14. Method according to any of claims 1-13 **characterized in that** in case of incidental loss of said user equipment (3), or the rules of the secure user identification protocol related to the user keys and/or the user keys becoming public, after this is reported through a communication channel, and after correct user identification the acceptance of the use of the user keys is suspended or terminated at the data managing device (5).

15. Method according to claim 14 **characterized in that** after the use of the user keys is suspended or terminated new user keys are generated which are used for establishing the secure connection.

## Patentansprüche

1. Verfahren zum Herstellen einer sicheren Verbindung in einem Kommunikationsnetz zwischen einer Datenverwaltungsvorrichtung (5) und einer Benutzervorrichtung (1), welche von einem Benutzer (2), der einer Benutzer-ID hat, betrieben wird, wobei die Datenverwaltungsvorrichtung (5) und die Benutzervorrichtung (1) solche IT-Einrichtungen sind, die geeignet sind zum Ausführen von Betriebsprogrammen und Datenverwaltungsprogrammen, und wobei zum Herstellen einer sicheren Verbindung eine Benutzerausrüstung (3), mit einer Tastatur geeignet zum Eingeben von Daten und mit einer Anzeige geeignet zum Anzeigen von Daten, der Benutzervorrichtung (1), die eine Anzeige/Bildschirm und eine Tastatur aufweist, zugeordnet ist; die Datenverwaltungsvorrichtung (5) ist mit einem Schlüsselverwaltungsprogramm ausgerüstet, das zum Herstellen sicherer Verbindungen und zum Erzeugen, Übertragen und Zurücknehmen von Zertifikaten und kryptographischen Schlüsseln geeignet ist; wobei die sichere Verbindung zwischen der Datenverwaltungsvorrichtung (5) und der Benutzervorrichtung (1) mit einer Anmeldungsanfrage von der Benutzervorrichtung (1) eingeleitet wird; und wobei vor dem Herstellen einer sicheren Verbindung der Datenverwaltungsvorrichtung (5) und der Benutzervorrichtung (1) die folgenden Schritte vorgenommen werden:
- Übertragen des Schlüsselverwaltungsprogramms zu der Benutzerausrüstung (3) geeignet zum Ausführen eines Computerprogramms oder von Computerprogrammen;
- Erzeugen eines Benutzerschlüssels oder -schlüsseln, die zum Herstellen einer sicheren Verbindung mit Hilfe eines geeigneten Programms, das auf einer unabhängigen IT-Vorrichtung oder der Datenverwaltungsvorrichtung (5) installiert ist, erforderlich sind;
- Senden des Benutzerschlüssels oder der Benutzerschlüssel auf sichere Weise zu der Benutzerausrüstung (3) und zu der Datenverwaltungsvorrichtung (5), wenn diese mit der unabhängigen IT-Vorrichtung erzeugt wurden;
- Speichern des Benutzerschlüssels oder der Benutzerschlüssel und einander zugeordneter Benutzer-ID in der Datenverwaltungsvorrichtung (5), während diese in der Benutzerausrüstung (3), die geeignet ist zum Speichern des Schlüssels oder der Schlüssel, unabhängig, jedoch auf eine sichere Weise, die nicht autorisierten Zugriff verhindert, gespeichert werden;
**dadurch gekennzeichnet, dass** die folgenden Schritte ausgeführt werden:
- Einleiten der Herstellung einer sicheren Verbindung mit der Datenverwaltungsvorrichtung (5) von der Benutzervorrichtung (1) durch das Kommunikationsnetz,
- Bestimmen von zumindest einem sicheren Benutzeridentifizierungsprotokoll mit Hilfe der Datenverwaltungsvorrichtung (5) und Kommunizieren dieses zu der Benutzervorrichtung (1),
- Warten auf die Benutzervorrichtung (1), um eine Benutzer-ID und einen einmaligen Anmeldecode, der in Übereinstimmung mit einem der sicheren Benutzeridentifizierungsprotokolls, das von der Datenverwaltungsvorrichtung (5) bestimmt wurde und zu der Benutzervorrichtung (1) kommuniziert wurde, generiert wurde, zu der Datenverwaltungsvorrichtung (5) zurückzusenden,
- Verlangen, dass der Benutzer (2) das Schlüsselverwaltungsprogramm auf der Benutzerausrüstung (3) startet,
- Verlangen, dass der Benutzer (2) eines von den sicheren Benutzeridentifizierungsprotokollen, die von der Datenverwaltungsvorrichtung (5) bestimmt wurden, auswählt,
- Erzeugen eines einmaligen Anmeldecodes mit Hilfe des auf der Benutzerausrüstung (3) laufenden Schlüsselverwaltungsprogramms und mit Hilfe des Benutzerschlüssels oder der Benutzerschlüssel, die zuvor zu der Benutzerausrüstung (3) gesandt wurden,
- Senden des einmaligen Anmeldecodes und der Benutzer-ID über die Benutzervorrichtung (1) zu der Datenverwaltungsvorrichtung (5) durch das Kommunikationsnetz;
- Bestimmen, ob die Benutzer-ID mit dem einmaligen Anmeldecode, der zu der Datenverwaltungsvorrichtung (5) gesandt wurde, übereinstimmt, dabei Ausführen einer sicheren Identifizierung des Benutzers (2), der die Benutzervorrichtung (1) bedient, durch Erzeugen des möglichen einmaligen Anmeldecodes oder möglicher einmaliger Anmeldecodes, der oder die zu der Benutzer-ID gehören, über die Datenverwaltungsvorrichtung (5) unter Verwendung des Schlüsselverwaltungsprogramms der Datenverwaltungsvorrichtung (5) und des Benutzerschlüssels oder der Benutzerschlüssel, der oder die zu der gegebenen Benutzer-ID gehören, und
- Erlauben über die Datenverwaltungsvorrichtung (5) das Herstellen einer sicheren Verbindung zwischen der Datenverwaltungsvorrichtung (5) und der Benutzervorrichtung (1) für den Benutzer (2), der die Benutzervorrichtung (1) bedient, für den Service, der zu dem gegebenen Benutzerschlüssel gehört, wenn der von der Benutzervorrichtung (1) gesandte einmalige Anmeldecode eine Übereinstimmung mit einem der erzeugten Anmeldecodes anzeigt.

2. Verfahren nach Anspruch 1, **dadurch gekennzeichnet, dass** die Datenverwaltungsvorrichtung (5) ein sicheres Benutzeridentifizierungsprotokoll benötigt, welches:
- ein auf einem einmaligen Anmeldecode basierendes Protokoll ist, wobei keine Serverdaten von der Datenverwaltungsvorrichtung (5) zu der Benutzervorrichtung (1) gesendet werden und wobei der erzeugte einmalige Anmeldecode direkt von der Benutzerausrüstung (3) gelesen werden kann;
- ein auf einem zusammengesetzten Anmeldecode basierendes Protokoll ist, wobei keine Serverdaten aber ein Aufforderungscode von der Datenverwaltungsvorrichtung (5) zu der Benutzervorrichtung (1) gesendet wird und wobei es zumindest zwei Arten von Benutzercodes gibt, einen normalen Benutzercode und einen Panik-Benutzercode, mit denen das Dekodieren der gegebenen Benutzerschlüssel ausgeführt wird, und wobei der einmalige Anmeldecode, der als Antwort auf den Benutzercode erzeugt wurde, von der Benutzerausrüstung (3) gelesen werden kann; oder
- ein Protokoll der Aufforderung/Antwort-Art ist, wobei die Datenverwaltungsvorrichtung (5) einen Aufforderungscode erzeugt, wobei der Aufforderungscode zu der der Benutzervorrichtung (1) gesendet wird.

3. Verfahren nach Anspruch 1, **gekennzeichnet durch**
- Verlangen eines sicheren Benutzeridentifizierungsprotokolls der Aufforderung/Antwort-Art mittels der Datenverwaltungsvorrichtung (5),
- Erzeugen eines Aufforderungscodes von der Datenverwaltungsvorrichtung (5),
- Senden des Aufforderungscodes zu der Benutzervorrichtung (1),
- Verlangen, dass der Benutzer den Aufforderungscode in die der Benutzerausrüstung (3) eingibt, mittels der Dateneingabeeinheit der der Benutzerausrüstung (3),
- Erzeugen eines einmaligen Anmeldecodes **durch** das Schlüsselverwaltungsprogramm. das auf der der Benutzerausrüstung (3) läuft, unter Verwendung einer der Benutzerschlüssel und des Aufforderungscodes,
- Anzeigen des erzeugten einmaligen Anmeldecodes auf der Anzeige der der Benutzerausrüstung (3),
- Verlangen, dass der Benutzer den einmaligen Anmeldecode in die Benutzervorrichtung (1) eingibt, mittels der Dateneingabe der Benutzervorrichtung (1).

4. Verfahren nach einem der Ansprüche 1-3, **gekennzeichnet durch** Erzeugen von einem oder mehreren Benutzerschlüsseln verschiedener Arten und unterschiedlicher kryptographischer Stärke, notwendig für die Herstellung einer sicheren Verbindung in der Datenverwaltungsvorrichtung (5) oder einer anderen IT-Vorrichtung, geeignet für diesen Zweck, unter dem Protokoll einer Person/Organisation, die die Datenverwaltungsvorrichtung (5) bedient; und gleichzeitiges Bereitstellen des oder der Benutzerschlüssel mit Schlüssel-ID(en), die der Identifizierung der Schlüssel dienen.

5. Verfahren nach einem der Ansprüche 1-4, **dadurch gekennzeichnet, dass** der oder die zum Herstellen einer sicheren Verbindung benötigten Schlüssel online zu dem Benutzer (2) und anschließend zu der Benutzerausrüstung (3) übertragen werden, durch das Kommunikationsnetz, das an der Verbindung der Datenverwaltungsvorrichtung (5) und der Benutzervorrichtung (1) teilnimmt, oder andere Festnetze oder drahtlose Netze unabhängig von diesem Kommunikationsnetz, die geeignet sind, zur sicheren Datenübertragung, währen die Schüssel-ID(en), die der sicheren Anlieferung des oder der Schlüssel dienen, zu dem Benutzer (2) in einem separaten Schritt, online oder per Post in gedruckter Form, an die der Benutzervorrichtung (1) oder die Benutzerausrüstung (3) übertragen werden.

6. Verfahren nach einem der Ansprüche 3-5, **dadurch gekennzeichnet, dass** zumindest zwei Benutzerschlüssel, ein normaler Schlüssel und ein Panikschlüssel, in der Benutzerausrüstung (3) und der Datenverwaltungsvorrichtung (5) angewandt werden, wobei der normale Schlüssel verwendet wird, um eine sichere, jedoch normale Verbindung herzustellen, die von dem Benutzer (2) eingeleitet wurde, während der Panikschlüssel verwendet wird, wenn der Benutzer (2) das Herstellen einer sicheren Verbindung unter Bedrohung einleitet.

7. Verfahren nach einem der Ansprüche 1-6, **dadurch gekennzeichnet, dass** zum Starten des auf der Benutzerausrüstung (3) installierten Schlüsselverwaltungsprogramms oder zum Starten von Operationen mit bestimmten Benutzerschlüsseln, ein Sicherheitscode von dem Benutzer (2) auf der Tastatur der Benutzerausrüstung (3) eingegeben werden muss oder durch eine andere Vorrichtung, geeignet zum Bestimmen der physischen Anwesenheit des Benutzers (2).

8. Verfahren nach Anspruch 7, **dadurch gekennzeichnet, dass** zum Starten des auf der Benutzerausrüstung (3) installierten Schlüsselverwaltungsprogramms oder zum Starten von Operationen mit bestimmten Benutzerschlüsseln, ein normaler Sicherheitscode in normalen Situationen und ein Panik-Sicherheitscode in bedrohten oder erzwungenen Situationen auf der Tastatur der Benutzerausrüstung (3) eingegeben wird.

9. Verfahren nach einem der Ansprüche 7-8, **dadurch gekennzeichnet, dass** zumindest zwei Arten von erwarteten Benutzercodes, die zu einer gegebenen Benutzer-ID gehören, in der der Datenverwaltungsvorrichtung (5) erzeugt werden, von denen einer ein normaler Anmeldecode ist, der sich auf die sichere Situation des Benutzers (2) bezieht, während der andere ein Panik-Anmeldecode ist, der die bedrohte Situation des Benutzers (2) verkörpert.

10. Verfahren nach Anspruch 9, **dadurch gekennzeichnet, dass** wenn während des Überprüfens des Anmeldecodes in der Datenverwaltungsvorrichtung (5) eine Korrespondenz mit dem Panik-Anmeldecode des Benutzers (2) bestimmt wird, Das herstellen der Verbindung zwischen der Datenverwaltungsvorrichtung (5) und der Benutzervorrichtung (1) auf eine Weise autorisiert wird, die sich von der normalen unterscheidet.

11. Verfahren nach Anspruch 10, **gekennzeichnet durch** Einleiten eines automatischen Alarmprozesses ausgewählt aus einer Gruppe bestehend aus Alarmieren der Polizei, Senden einer SMS-, Fax-, E-Mail- oder Telefonnachricht zu den Personen, die zuvor in der Datenverwaltungsvorrichtung (5) für solche Fälle gesetzt wurden.

12. Verfahren nach einem der Ansprüche 1-11, **dadurch gekennzeichnet, dass** um dem Benutzer (2) zu ermöglichen, eine sichere Verbindung parallel oder in Folge mit mehreren Dienstleistungsanbietern, die eine bestimmte Anzahl von Datenverwaltungsvorrichtung (5) bedienen, herzustellen, mehrere Schlüssel desselben oder unterschiedlichen Typs und Technologie, mit unterschiedlichen Längen, die einem bestimmten Benutzer (2) gehören, in der Datenverwaltungsvorrichtung (5) und der Benutzerausrüstung (3) angewandt werden, wobei Schlüssel mit unterschiedlicher kryptographischer Stärke zum Erzeugen des einmaligen Anmeldecodes verwendet werden.

13. Verfahren nach einem der Ansprüche 1-12, **dadurch gekennzeichnet, dass** wenn ein falscher Code wiederholt in die Benutzerausrüstung (3) eingegeben wird, der oder die Benutzerschlüssel automatisch beseitigt werden.

14. Verfahren nach einem der Ansprüche 1-13, **dadurch gekennzeichnet, dass** in dem Fall des zufälligen Verlustes der Benutzerausrüstung (3) oder der Regeln des sicheren Benutzeridentifizierungsprotokolls zugehörig zu den Benutzerschlüsseln und/oder des öffentlich Werdens der Benutzerschlüssel, nachdem dies durch einen Kommunikationskanal gemeldet wurde, und nach korrekter Benutzeridentifizierung, die Akzeptanz der Benutzerschlüssel von der Datenverwaltungsvorrichtung (5) eingestellt oder beendet wird.

15. Verfahren nach Anspruch 14, **dadurch gekennzeichnet, dass** nach dem Einstellen oder Beenden der Verwendung der Benutzerschlüssel neue Benutzerschlüssel erzeugt werden, die zum Herstellen der sicheren Verbindung verwendet werden.

## Revendications

1. Procédé d'établissement d'une connexion sécurisée dans un réseau de communication entre un dispositif de gestion de données (5) et un dispositif utilisateur (1) qui est actionné par un utilisateur (2) ayant une ID utilisateur, dans lequel ledit dispositif de gestion de données (5) et ledit dispositif utilisateur (1) sont des moyens IT qui sont à même de faire tourner des programmes de fonctionnement et des programmes de gestion de données et, pour établir une connexion sécurisée, un équipement utilisateur (3) ayant un clavier qui est à même de saisir des données et un affichage qui est à même d'afficher des données est affecté au dispositif utilisateur (1), ayant un affichage/moniteur et un clavier ; ledit dispositif de gestion de données (5) est pourvu d'un programme de gestion de clés qui est à même d'établir des connexions sécurisées et pour la génération, la transmission et le retrait de certificats et de clés cryptographiques ; dans lequel la connexion sécurisée entre ledit dispositif de gestion de données (5) et ledit dispositif utilisateur (1) est initiée avec une demande de connexion de la part du dispositif utilisateur (1) ; et, avant d'établir une connexion sécurisée entre ledit dispositif de gestion de données (5) et ledit dispositif utilisateur (1), on effectue les étapes suivantes consistant à :
- transférer le programme de gestion de clés audit équipement utilisateur (3) qui est adapté au fonctionnement du ou des programmes informatiques ;
- générer une ou des clés utilisateur requises pour établir une connexion sécurisée au moyen d'un programme approprié installé sur un dispositif IT indépendant ou sur ledit dispositif de gestion de données (5) ;
- envoyer la ou lesdites clés utilisateur de manière sécurisée audit équipement utilisateur (3) et audit dispositif de gestion de données (5) si elles étaient générées par le dispositif IT indépendant ;
- stocker la ou lesdites clés utilisateur et les ID utilisateur affectées à chacune d'entre elles dans ledit dispositif de gestion de données (5), tandis que, dans ledit équipement utilisateur (3) adapté au stockage de la ou des clés, celles-ci sont stockées de manière indépendante, mais de manière sécurisée empêchant un accès non autorisé ;
**caractérisé en ce que** l'on réalise les étapes suivantes consistant à :
- initier l'établissement d'une connexion sécurisée avec ledit dispositif de gestion de données (5) à partir dudit dispositif utilisateur (1) via le réseau de communication,
- déterminer au moins un protocole d'identification d'utilisateur sécurisée par ledit dispositif de gestion de données (5) et le communiquer audit dispositif utilisateur (1),
- attendre que le dispositif utilisateur (1) renvoie au dispositif de gestion de données (5) une ID utilisateur et un code de connexion à usage unique généré conformément à l'un quelconque des protocoles d'identification utilisateur sécurisée déterminés par ledit dispositif de gestion de données (5) et communiqué audit dispositif utilisateur (1),
- demander à l'utilisateur (2) de lancer le programme de gestion de clés sur l'équipement utilisateur (3),
- demander à l'utilisateur (2) de choisir l'un quelconque des protocoles d'identification utilisateur sécurisée déterminés par le dispositif de gestion de données (5),
- générer le code de connexion à usage unique au moyen du programme de gestion de clés tournant sur l'équipement utilisateur (3) et au moyen de la ou des clés utilisateur précédemment envoyées à l'équipement utilisateur (3),
- envoyer le code de connexion à usage unique et l'ID utilisateur via le dispositif utilisateur (1) audit dispositif de gestion de données (5) via le réseau de communication,
- déterminer si l'ID utilisateur correspond au code de connexion à usage unique envoyé audit dispositif de gestion de données (5), en effectuant ainsi une identification sécurisée de l'utilisateur (2) actionnant le dispositif utilisateur (1) en générant le ou les codes de connexion à usage uniques possibles appartenant à l'ID utilisateur via ledit dispositif de gestion de données (5) en utilisant le programme de gestion de clés du dispositif de gestion de données (5) et la ou les clés utilisateur appartenant à l'ID utilisateur donné ; et
- permettre via le dispositif de gestion de données (5) l'établissement de la connexion sécurisée entre le dispositif de gestion de données (5) et le dispositif utilisateur (1) pour l'utilisateur (2) qui actionne le dispositif utilisateur (1) pour le service appartenant à la clé utilisateur donnée si le code de connexion à usage unique envoyé par le dispositif utilisateur (1) indique une conformité avec l'un quelconque du ou des codes de connexion générés.

2. Procédé selon la revendication 1, **caractérisé en ce que** le dispositif de gestion de données (5) nécessite un protocole d'identification d'utilisateur sécurisée qui est :
- un protocole basé sur un code de connexion à usage unique, dans lequel aucune donnée de serveur n'est envoyée du dispositif de gestion de données (5) au dispositif utilisateur (1) et le code de connexion à usage unique généré peut être lu directement auprès de l'équipement utilisateur (3) ;
- un protocole basé sur un code de connexion en temps combiné, dans lequel aucune donnée de serveur tel qu'un code de challenge n'est envoyée du dispositif de gestion de données (5) au dispositif utilisateur (1) et il y a au moins deux types de codes utilisateur, un code utilisateur normal et un code utilisateur d'urgence, avec lesquels le décodage des clés utilisateur données est exécuté et le code de connexion à usage unique généré en réponse au code utilisateur peut être lu par l'équipement utilisateur (3) ; ou
- un protocole de type challenge/réponse, dans lequel le dispositif de gestion de données (5) génère un code de challenge, lequel code de challenge est envoyé au dispositif utilisateur (1).

3. Procédé selon la revendication 1, **caractérisé en ce qu'**il comprend les étapes consistant à :
- demander par le dispositif de gestion de données (5) un protocole d'identification utilisateur sécurisée de type challenge/réponse,
- générer un code de challenge par le dispositif de gestion de données (5),
- envoyer le code de challenge au dispositif utilisateur (1),
- demander à l'utilisateur de saisir le code de challenge dans l'équipement utilisateur (3) via l'unité d'entrée de données de l'équipement utilisateur (3),
- générer le code de connexion à usage unique par le programme de gestion de clés tournant sur l'équipement utilisateur (3) en utilisant l'un ou l'autre des clés utilisateur et du code de challenge,
- afficher le code de connexion à usage unique généré sur l'affichage de l'équipement utilisateur (3) et
- demander à l'utilisateur de saisir le code de connexion à usage unique dans le dispositif utilisateur (1) via l'entrée de données du dispositif utilisateur (1).

4. Procédé selon l'une quelconque des revendications 1 à 3, **caractérisé par** la génération de clé(s) utilisateur de différents types et de force différente au plan cryptographique requise pour l'établissement de la connexion sécurisée dans le dispositif de gestion de données (5) ou dans un autre dispositif IT convenant à cet effet sous le contrôle d'une personne ou d'une organisation actionnant le dispositif de gestion de données (5) et, en même temps, la ou les clés utilisateur est ou sont également pourvues d'ID de clés servant à l'identification des clés.

5. Procédé selon l'une quelconque des revendications 1 à 4, **caractérisé en ce que** la ou les clés nécessaires pour l'établissement de la connexion sécurisée est ou sont transmises en ligne à l'utilisateur (2), puis audit équipement utilisateur (3) via le réseau de communication participant à la connexion dudit dispositif de gestion de données (5) et dudit dispositif utilisateur (1), ou un autre réseau fixe ou sans fil indépendant de ce réseau de communication et convenant pour sécuriser la transmission de données, tandis que la ou les ID de clés garantissant la fourniture sécurisée de la ou des clés est ou sont transmises à l'utilisateur (2) dans une étape séparée en ligne ou par la poste sous forme imprimée audit dispositif utilisateur (1) ou audit équipement utilisateur (3).

6. Procédé selon l'une quelconque des revendications 3 à 5, **caractérisé en ce qu'**au moins deux clés utilisateur, une clé normale et une clé d'urgence, sont appliquées dans ledit équipement utilisateur (3) et dans ledit dispositif de gestion de données (5), la clé normale est utilisée pour établir une connexion sécurisée, mais normale, initiée par l'utilisateur (2), tandis que la clé d'urgence est utilisée lorsque l'utilisateur (2) initie l'établissement de la connexion sécurisée sous la contrainte.

7. Procédé selon l'une quelconque des revendications 1 à 6, **caractérisé en ce que**, pour démarrer le programme de gestion de clés installé sur ledit équipement utilisateur (3) ou pour démarrer des opérations avec certaines clés utilisateur, on demande qu'un code de sécurité soit saisi par l'utilisateur (2) sur le clavier dudit équipement utilisateur (3) ou via un autre dispositif convenant à la détermination de la présence physique de l'utilisateur (2).

8. Procédé selon la revendication 7, **caractérisé en ce que**, pour démarrer le programme de gestion de clés installé sur ledit équipement utilisateur (3) ou pour démarrer des opérations avec certaines clés utilisateur, un code de sécurité normal dans des situations normales et un code de sécurité d'urgence dans une situation de contrainte ou forcée sont saisis via le clavier dudit équipement utilisateur (3).

9. Procédé selon l'une quelconque des revendications 7 et 8, **caractérisé en ce qu'**au moins deux types de codes utilisateur attendus appartenant à l'ID utilisateur donné sont générés dans ledit dispositif de gestion de données (5), dont l'un est un code de connexion normal se référant à la situation sécurisée de l'utilisateur (2), tandis que l'autre est un code de connexion d'urgence illustrant la situation de contrainte de l'utilisateur (2).

10. Procédé selon la revendication 9, **caractérisé en ce que**, si au cours du contrôle du code de connexion dans ledit dispositif de gestion de données (5), une correspondance avec le code de connexion d'urgence de l'utilisateur (2) est déterminée, l'établissement de la connexion entre ledit dispositif de gestion de données (5) et ledit dispositif utilisateur (1) est autorisé d'une manière différente de la normale.

11. Procédé selon la revendication 10, **caractérisé par** l'initiation d'un processus d'alerte automatique choisi dans le groupe constitué d'une alerte de la police, de l'envoi d'un SMS, d'un fax, d'un courriel ou d'un message téléphonique aux personnes précédemment définies dans le dispositif de gestion de données (5) pour de tels cas.

12. Procédé selon l'une quelconque des revendications 1 à 11, **caractérisé en ce que**, pour que l'utilisateur (2) soit à même d'établir une connexion sécurisée en parallèle ou en séquence avec plus de fournisseurs de services opérant avec un nombre fini de dispositifs de gestion de données (5), plusieurs clés de types et technologies identiques ou différents, avec une longueur différente appartenant à l'utilisateur donné (2) sont appliquées dans le dispositif de gestion de données (5) et dans l'équipement utilisateur (3), en sorte que des clés de différentes forces cryptographiques soient utilisées pour la génération du code de connexion à usage unique.

13. Procédé selon l'une quelconque des revendications 1 à 12, **caractérisé en ce que**, si un code erroné est saisi de manière répétée dans ledit équipement utilisateur (3), la ou les clés d'utilisateur est ou sont automatiquement éliminées.

14. Procédé selon l'une quelconque des revendications 1 à 13, **caractérisé en ce que**, dans le cas d'une perte fortuite dudit équipement utilisateur (3) ou si les règles du protocole d'identification d'utilisateur sécurisée rapportées aux clés utilisateur et/ou les clés utilisateur devenaient publiques, après que cela aura été rapporté par un canal de communication et après une identification correcte de l'utilisateur, l'acceptation de l'utilisation des clés utilisateur est suspendue ou terminée dans le dispositif de gestion de données (5).

15. Procédé selon la revendication 14, **caractérisé en ce que**, après que l'utilisation des clés utilisateur aura été suspendue ou terminée, de nouvelles clés utilisateur sont générées, qui sont utilisées pour établir la connexion sécurisée.
